# EUROPEAN PATENT APPLICATION

(11) **EP 1 717 997 A1**
(43) Date of publication of application: **02.11.2006**
(21) Application number: 06007273.3
(22) Date of filing: 06.04.2006
(51) Int. Cl.: H04L 12/28

(54) **Decreasing mutual interference between multiple bluetooth piconets by controlling the channel usage with help of the adaptive frequency hopping methods**

(30) Priority: 25.04.2005 US 113285
(71) Applicant: Nokia Corporation, 02150 Espoo (FI)
(72) Inventor: Ruuska, Päivi M., 33720 Tampere (FI)
(74) Representative: Becker Kurig Straus

(57) **Abstract**

The present invention reduces inter-network interference between simultaneously-operating closely situated short-range wireless networks. The system provides a central controller that, in addition to eliminating frequencies with known outside interference, may divide an available frequency range into groups of sub-bands that are assigned to the various wireless networks. The wireless communication modules controlling these networks operate only within these assigned sub-bands, and therefore are prevented from conflicting with each other.

## Description

### BACKGROUND OF INVENTION

### 1. Field of Invention:

The present invention relates to multiple short-range communication modules implemented in close proximity. More specifically, the invention regards a method of minimizing conflicts between similar frequency bandwidth short-range communication modules operating in close proximity to each other (e.g., in the same wireless communication device).

### 2. Description of Prior Art:

As telecommunication technology matures, the use of wireless communications has moved from a luxury to a necessity in today's society. A wireless communication device (WCD) may communicate via a multitude of methods. These communication networks may be employed in various applications depending on the requirements of a given situation. Characteristics determining an appropriate network include the type of information to be transmitted, the expected transmission distance, the required speed of communication, the sensitivity of the information (security), the number of sources/recipients, etc.

Cellular networks facilitate WCD communications over large geographic areas. GSM, a widely employed cellular network which communicates in the 900 MHZ and 1.8 GHZ band in Europe and at 1.9 GHZ in the United States, provides voice communication and supports the transmission of textual data via the Short Messaging Service (SMS). SMS allows a WCD to transmit and receive text messages of up to 160 characters. It also provides data transfer to packet networks, ISDN and POTS users at 9.6 Kbps. While cellular networks like GSM are a well-accepted means for transmitting and receiving data, due to cost, traffic and regulatory concerns, a cellular network may not be appropriate for all data transmission applications.

Short-range wireless networks provide communication solutions that avoid the problems seen in cellular networks. Bluetooth™ is an example of a short-range wireless technology quickly gaining acceptance in the marketplace. A Bluetooth™ enabled WCD transmits and receives data at a rate of 720 Kbps within a range of 10 meters, and may transmit up to 100 meters with additional power boosting. A user does not actively instigate a Bluetooth™ network. Instead, a plurality of devices within operating range of each other will automatically form a network group called a "piconet". Any device may promote itself to the master of the piconet, allowing it to control data exchanges with up to seven "active" slaves and 255 "parked" slaves via their particular Parked Member Address (PM_ADDR). The master may also address any device in transmission range by using its Bluetooth™ Device Address (BD_ADDR), even if it is not a member of the previously indicated 255 devices. Active slaves exchange data based on the clock timing of the master. Parked slaves monitor a beacon signal in order to stay synchronized with the master. The master may unpark a parked device. Parked devices switch between various active communication and power saving modes in order to transmit data to the master.

While short-range communication networks like Bluetooth™ are convenient, they are somewhat restricted in their application. The original Bluetooth™ specification was designed around the principal of "replacing wires" connecting various electronic devices. As a result, piconets are limited to a small number of active connections over a short distance. This original intent for Bluetooth™ conflicts with the current desire to implement it in applications requiring more simultaneous active connections. For example, a wireless system for monitoring the kinetic activity of a human body may require twelve or more sensors transmitting at a twenty millisecond rate. In order to communicate with more than seven devices at such a high speed, multiple Bluetooth™ masters must be employed in close proximity to each other (possibly in the same device). Problems may then occur because master/slave communications occurring on the same channel will cause transmission collisions between the various piconets. If there is no provision for message retransmission, information is lost and communication becomes unreliable. The addition of message retransmission functionality results in only a marginal improvement since it will create slower overall communications. These problems defeat the initial desire of having the two or more Bluetooth™ networks work together.

The interference of a plurality of closely-situated devices operating in the same frequency range is a problem in the art. Because Bluetooth™ operates in an unlicensed frequency band, other systems utilizing the band (e.g., wireless local area networks (WLAN), radio wave emissions from microwave ovens, etc.) may cause background noise. Interference from these systems cause packets to be lost, which requires the retransmission of information and the slowing of the overall communication performance. For example if WLAN interferes badly about 20 channels, roughly 20/79 ≈ 25% of the Bluetooth™ transmissions are corrupted.

Short-range radio networks currently attempt to deal with interference problems using a multitude of methods. One method relies upon the mapping and exclusion of frequencies experiencing external "noise". Another method controls when various communication modules situated in the same device are active by using a central controller to alternate the transmissions of the modules.

While these provisions may improve communications, there are still substantial problems in the art. The marking or indicating of frequencies experiencing foreign noise may avoid outside disturbances. However, this practice is only effective against sustained, static interference. This method will not help to prevent communication collisions between a plurality of similar communication nodes operating sporadically within the same frequency range while in close proximity to each other. Alternatively, while the implementation of the previously recited central controller strategy may improve an interference problem between similar nodes in the same device, the network must then sacrifice desired transmission speed due to the constant alternation of active communication nodes by the central controller.

Therefore, what is needed is a short-range communication strategy providing high speed performance to a plurality of active nodes by allowing a plurality of short-range networks operating within the same frequency range to co-exist in close proximity with minimal or no conflicts due to simultaneous transmissions on the same channel.

### SUMMARY OF INVENTION

The present invention consists of a system, apparatus, method, chipset and computer program for reducing interference between closely-situated wireless communication modules. The system provides a central controller that, in addition to eliminating frequencies with known outside interference, may divide an available frequency range into groups of sub-bands that are assigned to various master devices. These devices operate networks only within these assigned sub-bands, and therefore are prevented from conflicting with each other. The advantage of this system is that the conflicting nodes do not have to modulated, and therefore may operate at their full speed potential.

The present invention includes at least three embodiments. The invention contemplates a plurality of master nodes, for example communicating via Bluetooth™ piconets, incorporated in the same wireless communication device. These nodes simultaneously communicate to slave devices located in transmission range of the WCD on sub-bands allocated by a channel controller. In an alternative embodiment, coexisting piconets are formed between a plurality of Bluetooth™ master nodes and slave nodes all incorporated within the same device.
A third mode is also contemplated wherein a plurality of Bluetooth™ master nodes communicate with slave modules in Scatternet mode.

The invention benefits from the ability of the channel controller to both identify channels being interfered with by outside elements, as well as the ability to subdivide the full communication spectrum into a segment for each master node so as to prevent transmission collisions. In this way, each master may a form a network with the required amount of channels allowing full speed communication between master and slave devices.

### DESCRIPTION OF DRAWINGS

The invention will be further understood from the following detailed description of a preferred embodiment, taken in conjunction with appended drawings, in which:

Figure 1 is a representation of a short-range network in accordance with an embodiment of the present invention.

Figure 2 is a modular representation of a short range network in accordance with an embodiment of the present invention.

Figure 3 is a functional representation of a wireless communication device in accordance with an embodiment of the present invention.

Figure 4 is a modular representation of two similar short-range wireless networks operating in close proximity to each other in accordance with an embodiment of the present invention.

Figure 5 is a representation of two similar short-range wireless networks operating in close proximity to each other and experiencing interference in accordance with an embodiment of the present invention.

Figure 6 is a modular representation of two similar closely-situated short-range networks coexisting with the aid of a central controller in accordance with an embodiment of the present invention.

Figure 7 is a functional representation of a plurality of similar short-range wireless networks coexisting with the aid of a central controller in accordance with an embodiment of the present invention.

Figure 8 is a representation of two similar short-range wireless networks operating in close proximity to each other and avoiding interference in accordance with an embodiment of the present invention.

Figure 9 is a flow diagram showing the interaction of two similar short-range wireless networks and a central controller regulating close-proximity operation while avoiding interference in accordance with an embodiment of the present invention.

Figure 10 is a representation of a plurality of closely-situated wireless networks including Scatternet devices in accordance with an embodiment of the instant invention.

Figure 11 is a flow diagram showing the interaction of closely situated wireless networks including Scatternet devices in accordance with an embodiment of the instant invention.

### DESCRIPTION OF PREFERRED EMBODIMENT

While the invention has been described in preferred embodiments, various changes can be made therein without departing from the spirit and scope of the invention, as described in the appended claims.
I. Operational environment for a basic wireless network

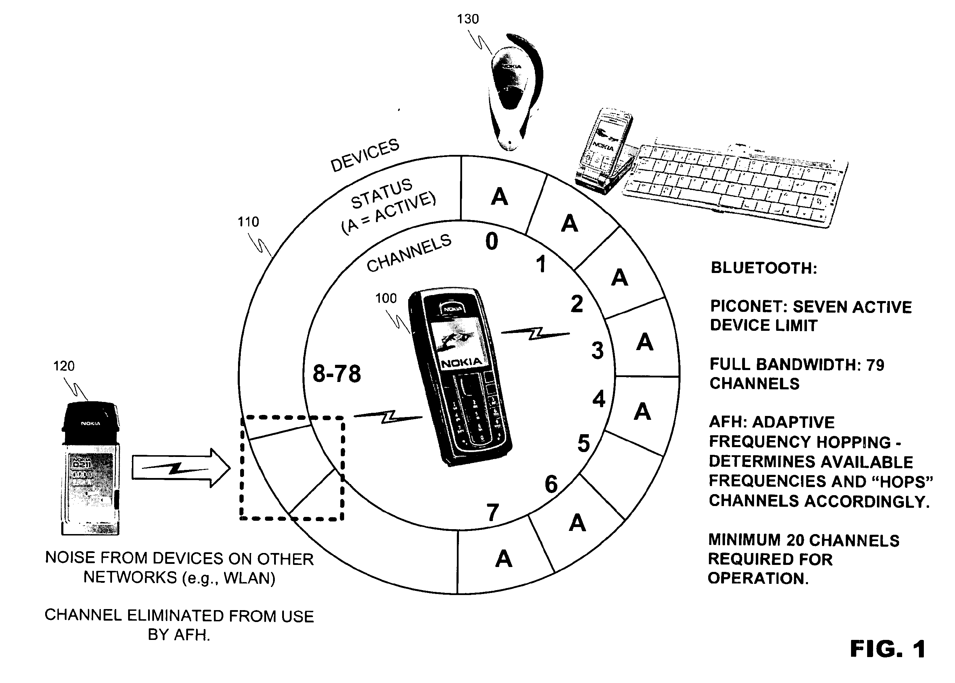

FIG. 1 depicts a short-range communication operating environment. A Bluetooth^{™} network is used for the sake of example, however, the invention may be applied to any short-range network implemented in a similar manner or usable for a similar application.
FIG 1. further shows an exemplary WCD 100 communicating with Bluetooth^{™} slave device 130. A Bluetooth^{™} slave device may be, but is not limited to, an input device (such as the headset or keyboard shown in the figure), an output device, a calculation device, a data storage device, etc.

The full Bluetooth^{™} communication bandwidth is divided into 79 channels displaced by 1 MHz starting at 2.402 MHz and ending at 2.480 MHz. Bluetooth^{™} uses spread spectrum frequency hopping, wherein a piconet selects a new channel after every 625µs timeslot. Exemplary channels 0 to 7 are shown in FIG. 1, along with an indicator "A" as to whether any devices are actively transmitting or receiving on a channel. At the moment in time depicted by FIG. 1, the headset slave device 130 and a master communication module in WCD 100 are communicating on channel 1. However, at the figured time slot (625µs) the devices will jump to a new channel (e.g., channel 4).

Since the band assigned to Bluetooth^{™} is public, the transmissions of other devices may cause interference within a piconet. In this example, WLAN card device 120 is operating on the 23 MHz wide channel also available for use to the piconet. Any transmission on this channel may be lost due to the interference caused by WLAN card 120. As a result, the master/slave would be forced to retransmit information, causing both the possibility of lost information and a slowdown of overall system performance. The loss of a single channel may not be problematic for the network, but in at least the case of Bluetooth^{™}, a minimum of 20 available channels are required to be used in a piconet.

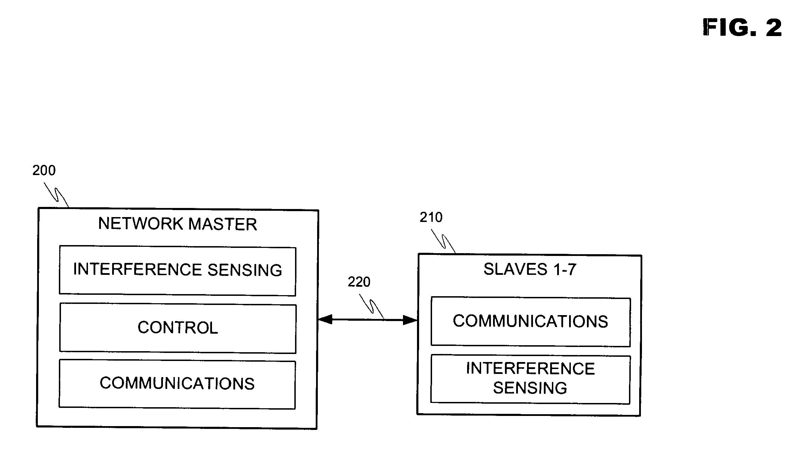

FIG. 2 shows a modular representation of a master and slave. In the case of Bluetooth^{™} operation, any device has the potential to be a master or a slave. A piconet is formed when one device connects to another device and they "hop" together through a pseudorandom channel pattern dictated by the master. The connection is established when one device transmits an "Inquire" message to determine other compatible devices in transmission range, or a "Page" message requesting to form a piconet with another device. In response to the Inquire message, the master receives a global identification from all the Bluetooth^{™} radio equipped devices within transmission distance. A master may then transmit a frequency hop synchronization (FHS) packet to a desired device using its global identification number. Included in the FHS packet is information (hop pattern, clock offset, etc.) allowing the slaves and master to concurrently hop from one frequency to another, ensuring that information will always be transmitted from one member of the piconet and received by another member of the piconet on the same frequency. The slave device will also receive an active member address (AMA), allowing other devices on the piconet to address it. Radios residing in the piconet but not currently active will receive a parked member address (PMA), or may be addressed via their Bluetooth^{™} Device Address (BD_ADDR).

Ideally, a Bluetooth^{™} piconet operates in the entire 79 channel spectrum. However, environmental noise may cause interference on some of these channels. Bluetooth^{™} specification 1.2 introduced the idea of adaptive frequency hopping (AFH) in order to avoid interference and improve overall system performance. In AFH, the master and/or slave senses interference on various channels, and the results are compiled by the master to create a channel map. The channel map allows the master to exclude channels experiencing interference from the channel hop sequence, thereby greatly reducing the chance that transmissions will be lost due to environmental noise.

In order to perform the above functionality, network master 200 and slaves 210 require certain resources. The Network Master includes at least a control section and a communication section. An interference sensing section may also be included. The interference sensing section may provide information on environment noise to the control section which uses the communications section to communicate with other devices. The slave device includes at least a communications section and may also contain an interference sensing section. The slave device may report information on sensed interferences to the master device via communications 220. The network master 200 then compiles all the interference information together to determine an AFH strategy.

### II. Wireless communication device

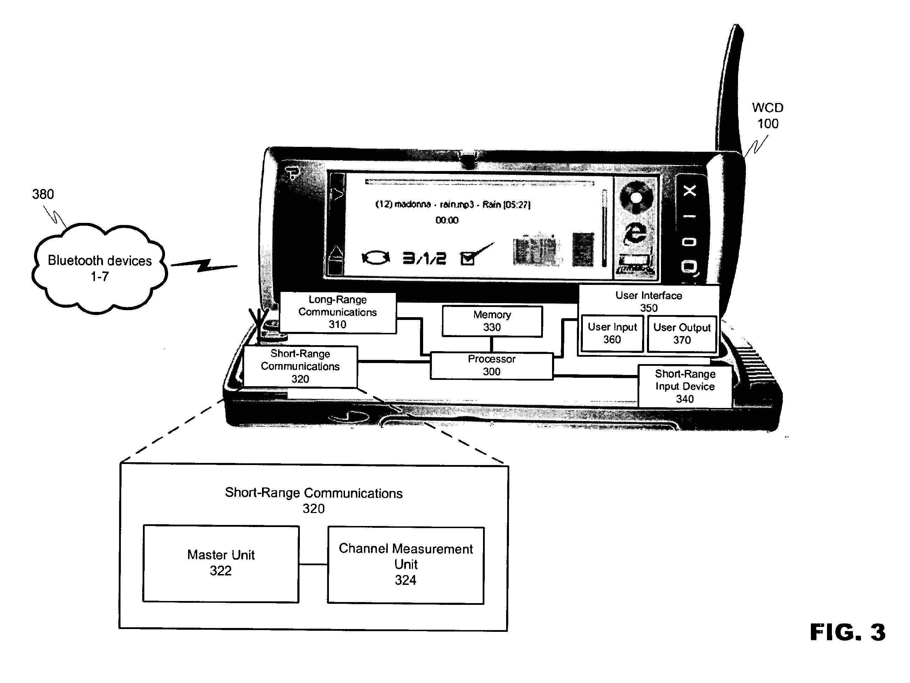

FIG. 3 discloses an exemplary functional layout of WCD 100 including various hardware and software resources that may, in at least one embodiment of the present invention, be applied, alone or in combination, to implement the model of functionality defined in FIG. 2. Processor 300 controls the overall device operation and is coupled to various resources, such as communications sections 310 and 320. Processor 300 may be implemented with one or more microprocessors that are each capable of executing software instructions stored in memory 330.

Memory 330 may include random access memory (RAM), read only memory (ROM), and/or flash memory, and stores information in the form of data and software components. The data stored by memory 330 may be associated with various software components used to control the functionality of WCD hardware components 300 through 370.

The software components stored by memory 330 include instructions that can be executed by processor 300. Various types of software components may be stored in memory 330. For instance, memory 330 may store software components that regulate the operation of communication sections 310 and 320. Also, memory 330 may store software components that provide control and conversion functionality for short range communications device 340, control components for user interface manager 350, and any ancillary control and/or communication utilities utilized by WCD 100.

Long-range communications 310 performs functions related to the exchange of information across long-range communications networks (such as cellular networks) via an antenna. Therefore, long-range communications 310 may operate to establish data communications sessions, such as General Packet Radio Service (GPRS) sessions and/or Universal Mobile Telecommunications System (UMTS) sessions. Also, long-range communications 310 may operate to transmit and receive messages, such as short messaging service (SMS) messages and/or multimedia messaging service (MMS) messages.

Short-range communications 320 is responsible for functions involving the exchange of information across short-range wireless connections. As described above, examples of such connections include Bluetooth^{™}, WLAN and UWB connections. Accordingly, short-range communications 320 may perform functions not limited to the automated establishment of short-range connections, security and/or permission control validating approved connections, and processing related to the transmission and reception of information via such connections. Included within the short-range communication section 320 is at least a master unit 322 and channel measurement unit 324. The channel measurement unit 324 may use methods known in the art such as Received Signal Strength Indication (RSSI), PER, etc. to determine environmental noise. These elements may be used in conjunction to set up a short-range wireless network while accounting for environmental interferences.

Short-range input device 340, as depicted in FIG. 3, may provide functions related to the capture and interpretation of machine-readable information. For instance, in the case of RFID communications, processor 300 or another control component may trigger short-range input device 340 to generate radio frequency signals for activating an RFID transponder, and may in turn control the reception of signals from RFID transponders. Other short-range communications functionality that may be supported through the short-range input device 340 are not limited to bar code readers including processes related to interpreting UPC labels, microtaggants, optical character recognition devices and magnetic ink character recognition devices.

Further shown in FIG. 3, user interface 350 is also coupled to processor 300.
User interface 350 facilitates the exchange of information with a user. FIG. 3 shows that user interface 350 includes a user input 360 and a user output 370. User input 360 may include one or more components that allow a user to input information. Examples of such components include keypads, touch screens, and microphones. User output 370 allows a user to receive information from the device. Thus, user output portion 370 may include various components, such as a display, Light emitting diodes (LED), tactile emitters and one or more audio speakers. Exemplary displays include liquid crystal displays (LCDs), and other video displays.

Hardware corresponding to communications sections 310 and 320 provide for the transmission and reception of signals. Accordingly, these portions may include components (e.g., electronics) that perform functions, such as modulation, demodulation, amplification, and filtering. These portions may be controlled by software communications components stored in memory 330.

The elements shown in FIG. 3 may be constituted and coupled according to various techniques. One such technique involves coupling separate hardware components corresponding to processor 300, communications sections 310 and 320, memory 330, short-range input device 340, user interface 350, etc. through one or more bus interfaces. Alternatively, any and/or all of the individual components may be replaced by an integrated circuit in the form of a programmable logic device, gate array, ASIC, multi-chip module, etc. programmed to replicate the functions of the stand-alone devices. In addition, each of these components is coupled to a power source, such as a removable and/or rechargeable battery (not shown).

The user interface 350 may interact with a communications utilities software component, also contained in memory 330, which provides for the establishment of service sessions using long-range communications 310 and/or short-range communications 320. The communications utilities component may include various routines that allow the reception of services from remote devices according to protocols, such as the Wireless Application Protocol (WAP).

When engaging in WAP communications with a remote server, the device functions as a WAP client. To provide this functionality, the software components may include WAP client software components, such as a Wireless Markup Language (WML) Browser, a WMLScript engine, a Push Subsystem, and a Wireless Protocol Stack.

Applications (not shown) may interact with the WAP client software to provide a variety of communications services. Examples of such communications services include the reception of Internet-based content, such as headline news, exchange rates, sports results, stock quotes, weather forecasts, multilingual phrase dictionaries, shopping and dining information, local transit (e.g., bus, train, and/or subway) schedules, personal online calendars, and online travel and banking services.

The WAP-enabled device may access small files called decks which each include smaller pages called cards. Cards are small enough to fit into a small display area that is referred to herein as a microbrowser. The small size of the microbrowser and the small file sizes are suitable for accommodating low memory devices and low-bandwidth communications constraints imposed by wireless links.

Cards are written in the Wireless Markup Language (WML), which is specifically devised for small screens and one-hand navigation without a keyboard. WML is scaleable so that it is compatible with a wide range of displays that covers two-line text displays, as well as large LCD screens found on devices, such as smart phones, PDAs, and personal communicators. WML cards may include programs written in WMLScript, which is similar to JavaScript. However, through the elimination of several unnecessary functions found in these other scripting languages, WMLScript reduces memory and processing demands.

### III. A plurality of similar networks operating in close proximity

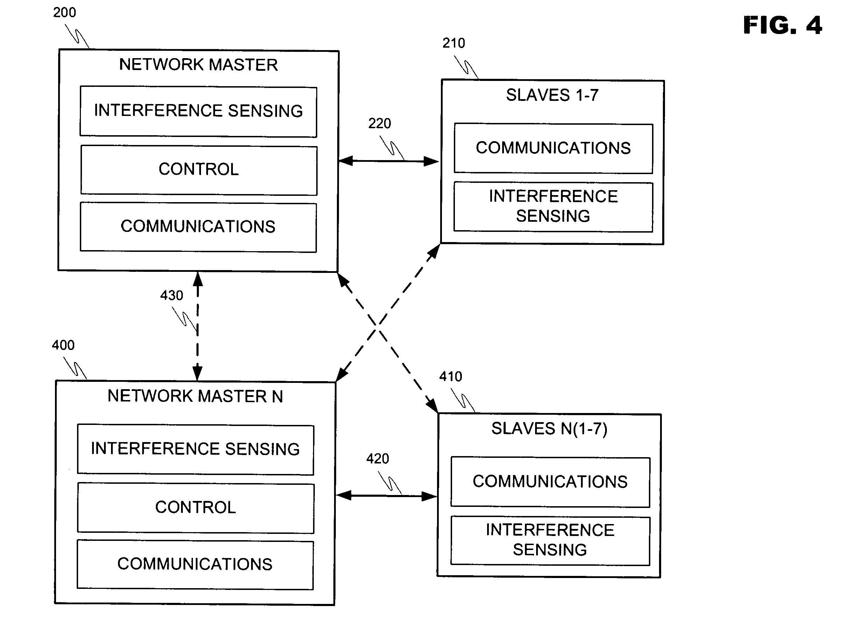

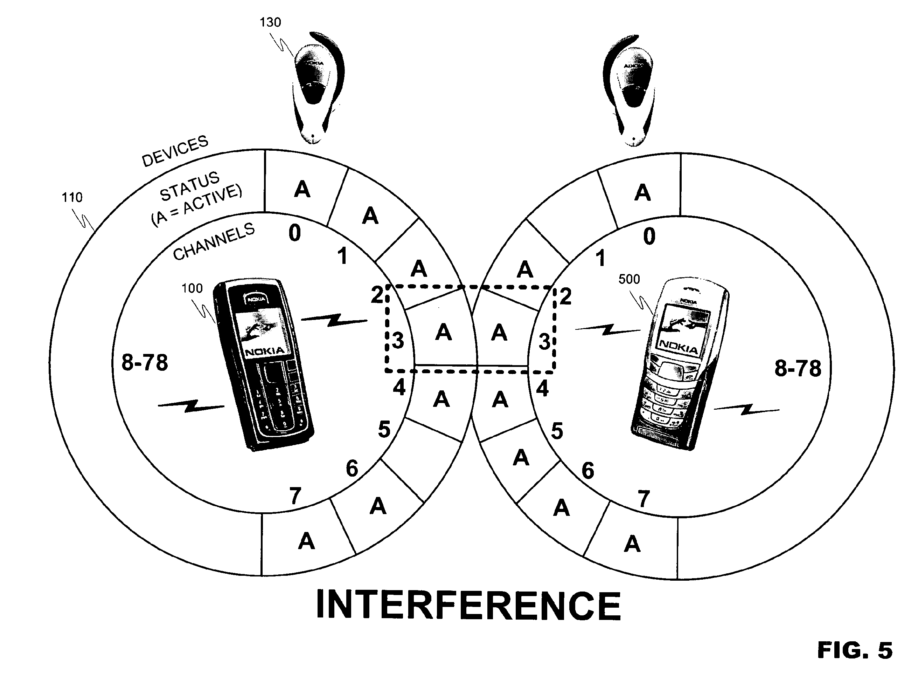

FIG. 4 is a modular depiction of a plurality of similar networks operating in close proximity. The simple network defined in FIG. 2 is now joined by network master N 400 controlling communications 420 between slave devices 410. In the case of Bluetooth™ devices, a device that is a master in one network may be a slave in another. In addition, devices switch modes often from active to parked and back to active again but in another piconet. Dotted arrows 430 demonstrate this relationship by showing that the various master and slave devices may be participating in the various piconets as well as within their originally established network. These devices may all include interference sensing functionality, contributing information to a master setting up channel maps. It is important to note that both masters are operating in the same 79 channel band width (less any channels eliminated due to environmental noise). This situation, and the problems associated with it are discussed further in FIG. 5.

Two close proximity short-range networks may experience interference with each other as well as environmental interferences. FIG. 5 shows a situation where two WCDs 100 and 500 have formed a piconet with slaves 130. While a channel map may be formed by each master to exclude environmental noise, these channel maps do not include other similarly situated networks in the transmission area. Therefore, at the moment in time shown in FIG. 5, the piconet formed by WCD 100 and the piconet formed by WCD 500 are both actively communicating on channel 3. These overlapping simultaneous communications may experience collisions, resulting in the loss of the transmission and possibly forcing the retransmission of information. This phenomena can be avoided when the masters utilize a non-overlapping set of channels.

### IV. The system of the instant invention

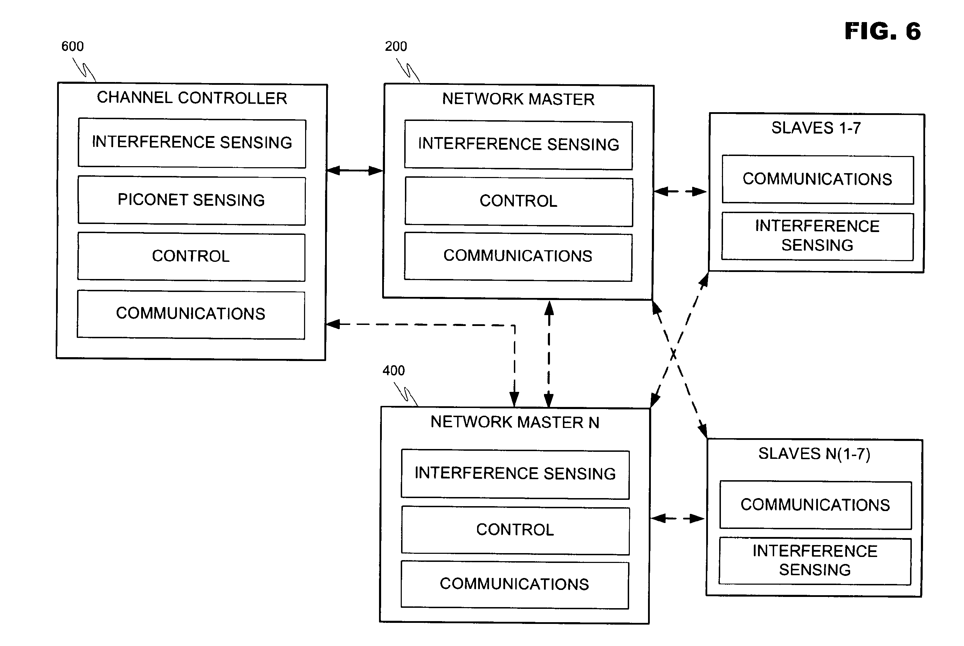

To overcome the existing problems related to closely situated short-range wireless networks, the present invention adds a control element to divide the bandwidth of various communication modules into sub-bands. FIG. 6 illustrates an exemplary modular embodiment of the invention. A channel controller 600 is added to the scenario presented in FIG. 4. Channel controller 600 is coupled to all of the piconets (masters and/or slaves), and includes resources for sensing and allocating sub-bands to the various network masters. FIG. 6 shows channel controller 600 coupled to network masters 200 and 400. The nature of this connection depends on the physical layout of the system. In at least one embodiment, channel controller 600 resides in a WCD with at least one of a plurality of network masters. Alternatively, a plurality of network masters and/or slaves may all reside in a single WCD device under the control of the channel controller 600. In a third embodiment, Scatternet devices are controlled remotely to prevent communication collisions in various closely-situated networks.

The channel controller 600 may include modular elements allowing it to sense interference from environmental noise, sense the various short-range networks actively operating in the effective transmission area, determine network requirements in the form of sub-bands for all the network masters under its control, and a communications section to allow control commands to be transmitted to the various network masters. In order to prevent interference and collisions, the channel controller may receive input from all master and slave devices in its transmission range regarding environmental disturbances. In the case of Bluetooth^{™} networks, the controller then takes the received information and uses it to eliminate certain noisy channels out of the full 79 channel bandwidth (AFH). The remaining channels are then subdivided into sub-bands, providing at least 20 channels per sub-band for each piconet. The piconets are limited to operating in different assigned bandwidths, preventing interference between them.

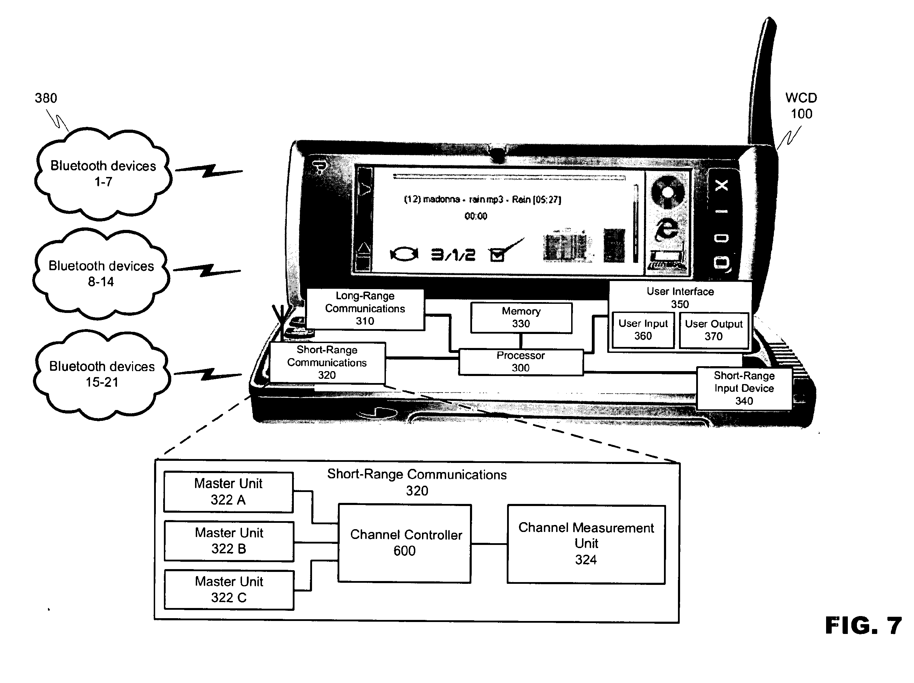

FIG. 7 discloses an exemplary functional layout of WCD 100 including various hardware and software resources that may, in at least one embodiment of the present invention, be applied, alone or in combination, to implement the model of functionality defined in FIG. 6. Items previously discussed have been labeled with the same number to preserve consistency in the disclosure. In FIG. 7, the WCD 100 additionally includes three Master Units 322A-C within the same device. As previously discussed in the case of Bluetooth^{™}, the use of multiple masters in the same WCD may be necessary due to the requirement of actively receiving information from more than seven slave devices at a high rate of speed. One master may be able to maintain 256 devices in one piconet, however, the necessity of activating and parking various slave devices so that only seven are active at any given time would necessarily create communication delays. In the exemplary WCD 100, having three Bluetooth^{™} masters allows 21 slave devices 380 to simultaneously communicate with the WCD 100. Channel controller 600 is coupled to channel measurement unit 324 and all of the master units 322A-C.

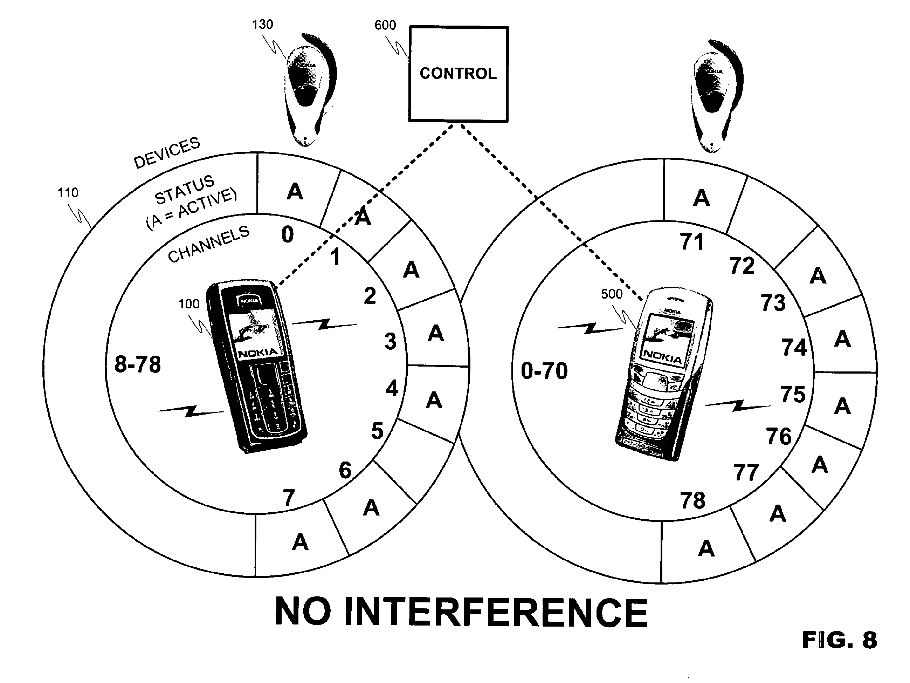

The collision-preventing effect of the invention is demonstrated in FIG. 8.
Similar to FIG. 5, two Bluetooth^{™}-enabled communication devices, 100 and 500, are closely situated and have formed piconets including various slave devices 130. However, in this case inter-bandwidth collisions are avoided by the influence of controller 600, which directly interacts with one or both WCDs. The controller 600 may prevent interference between short-range networks operating in close proximity to each other by assigning a different sub-band of the total available bandwidth to each network. At this moment in time, WCD 100 is currently restricted to using a lower sub-band of channels 0-19 for its channel map. WCD 500 is currently restricted to higher subnet of channels including 58-78 for its channel map. The two piconets cannot interfere with each other because they can never operate within the same bandwidth. Given a total available bandwidth of 79 channels and a minimum requirement of 20 channels per piconet, almost four piconets can operate in close proximity under this system without experiencing inter-network interference from devices communicating on the same channel. However, the number of piconets allowed to operate in close proximity to each other is also affected by environmental interference, which lowers the total number of available channels.

### V. Operation of the basic invention

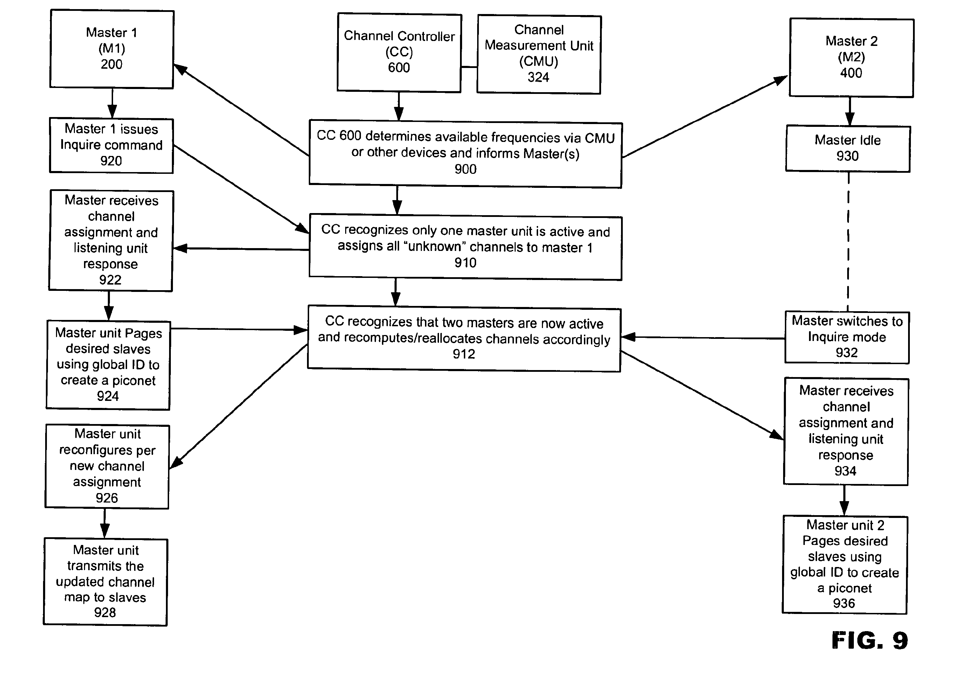

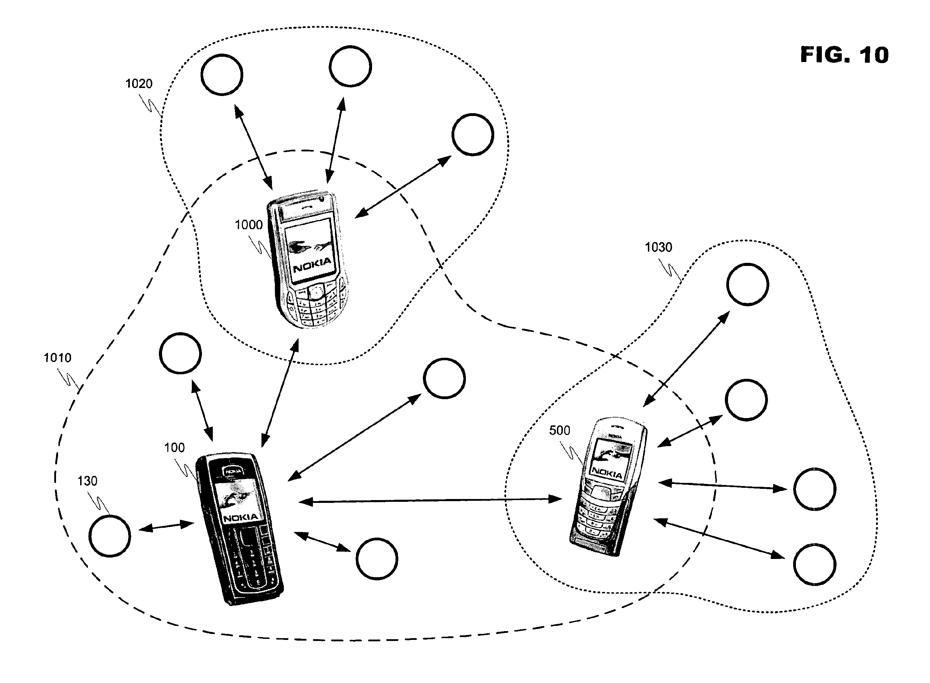

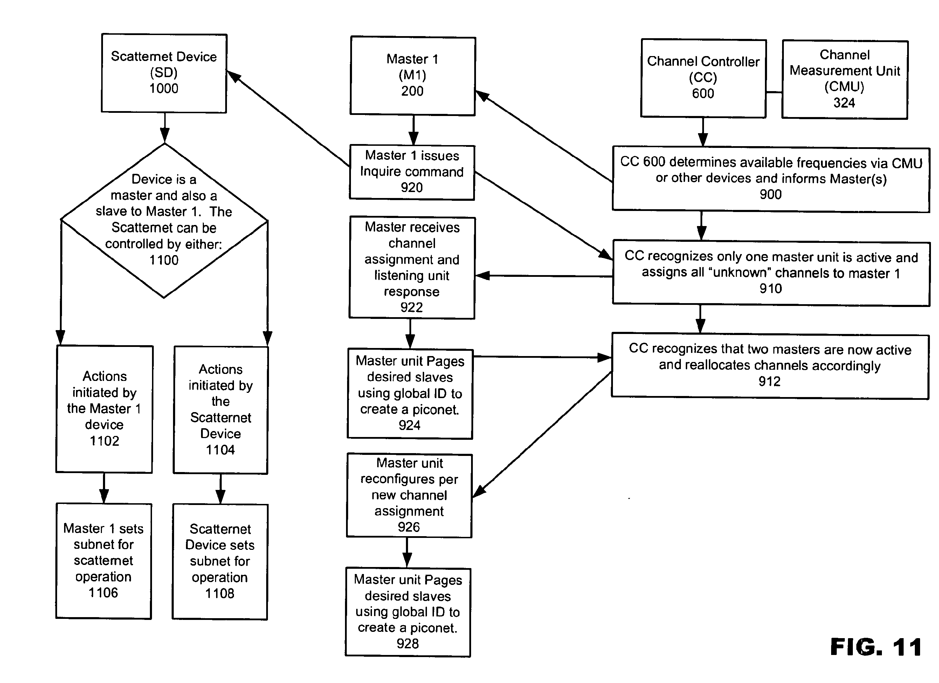

A flow chart demonstrating an exemplary execution of the system may be found in FIG. 9. The flow chart shows three interacting components of the system: The channel controller (CC) 600 including a channel measurement unit (CMU) 324, as well as master 1 (M1) 200 and master 2 (M2) 400. The setup and flow chart for a Scatternet device are shown separately in figures 10 and 11 respectively.

In step 900, the CC 600 determines the available frequencies for network operation. The CC 600 may receive interference information from its own CMU 324, or it may receive interference information from clients or slaves under its control. The CC 600 then uses this information to establish a channel map. The map indicates frequencies that are "Bad" (experiencing interference) or "Unknown". The Unknown channels may be used and/or subdivided between the various networks known to the CC 600.

M1 200 desires to form a piconet and switches to Inquiry mode at step 920. The CC 600 senses that M1 200 has become active and checks to account for both the available channels (channels not experiencing environmental interference) and the other closely situated masters that are currently operating. CC 600 determines in this case that M1 200 is the only active master under its control and assigns all available channels to M1 200 (step 910). M1 200 receives the channel assignment and evaluates the listening unit response to its Inquiry message in step 922. M1 200 is now aware of the available Bluetooth™ enabled devices from which it may form a piconet, and also of the sub-band of frequencies allowed for operation (currently the entire available bandwidth since it is the only detected active master). In step 924 M1 200 pages the devices it desires to become active participants in a piconet. The various slave devices receive an FHS packet from M1 200 indicating the frequency hopping pattern and offset. This information enables all of the piconet members to hop frequencies with the M1 200. After receiving an AMA or PMA number from M1 200, the different members of the piconet may communicate according to their active or parked status.

M2 400 has been idle during the aforementioned execution as shown in step 930. Now in step 932, M2 400 becomes active and issues an Inquiry message. CC 600 detects this change of state and recomputes/reallocates the sub-band allocations. This step may involve an updated investigation into channels unavailable due to environmental noise as reported by the CMU 324 or any other available master or slave device. The CC 600 will also evaluate the total number of masters operating within the transmission area of the short-range networks and will subdivide the available channels accordingly. In this case, there are two interoperating networks. Therefore, the channel controller 600 would split the available channels between the two masters in step 912.

M1 200 until this point has been operating a piconet under its original channel assignment. In step 926, new commands are received from channel controller 600 instructing a new reduced sub-band. M1 200 may then adjust its operation to account for the new operating parameters by labeling both channels excluded due to environmental noise and channels not designated in the allocated sub-band as Bad. This information is also transmitted to the slaves, which use the updated operating parameters to calculate a new hop pattern (step 928). Likewise, M2 400 receives a sub-band assignment from CC 600, and issues a Page command to establish its own piconet under the sub-band assigned by CC 600. Here as well, the channels experiencing environmental interference and the channels designated to be used in the M1 200 sub-band will be labeled as Bad channels.

CC 600 continues to evaluate the masters within effective operating range. Whenever a change occurs, CC 600 reallocates the available bandwidth to account for the addition or subtraction of an active communication module (e.g. a master) or an environmental disturbance. Likewise, the masters under the control of CC 600 will continually modify their operation to limit themselves to the bandwidth assigned in their respective sub-bands.

### VI. Scatternet systems

In a Scatternet, a slave device in one piconet is also a master device in another closely-situated piconet. This relationship is shown in terms of exemplary Bluetooth™ communication in FIG. 10. Here WCD 100 has created a piconet 1010. WCDs 1000 and 500 are members of this piconet, as well as a multitude of other slave devices 130. However, WCDs 1000 and 500 also have their own piconets 1020 and 1030 respectively, each of which include their own slaves 130. The problem introduced by this situation is how to control the behavior of a device indirectly connected to the channel controller so as to avoid conflicts between piconets operating in close proximity (e.g., a multitude of Bluetooth™ nodes all residing in the same device but not directly coupled to the channel controller.)

A n exemplary flow chart for regulating Scatternet operation is shown in FIG. 11. The functionality of CC 600 and M1 200 is similar to that of FIG. 9. Here Scatternet Device (SD) 1000 is a slave member the piconet formed by M1 200. This Scatternet Device (SD) 1000 will also establish a piconet where it acts as a master.

There are two fundamental methods for allocating a subnet of available channels to the SD 1000 as shown in step 1100: Actions initiated by the M1 200 and actions initiated by the SD 1000.

In step 1102, The sub-band for SD 1000 may ultimately be provided through M1 200. M1 200 may sense that there are one or more Scatternet devices contained in its piconet. There are a number of ways to make this determination. For example, a slave device may be deemed a Scatternet device if it is not always present in the piconet. The master may discover this condition if the slave does not respond to most of the master polls. Once M1 200 suspects that various Scatternet devices are operating in the piconet, it may inform CC 600 of this information. CC 600 may then recompute/reallocate a new sub-band to M1 200 restricted to an artificially low channel bandwidth (e.g., the 20 channel minimum). CC 600 may then instruct M1 200 to allocate other unused sub-bands to suspected Scatternet devices that are slaves in its piconet. Otherwise, M1 200 may be informed of a Scatternet device via a request. The request may include a preset sub-band being requested for the Scatternet device (e.g., "May I use bands 0-20 to operate in a non-conflicting sub-band..."). M1 200 device may compile all of these requests from slave devices and, with the assistance of CC 600, may reallocate available bandwidth accordingly.

Alternatively, SD 1000 may include algorithms allowing it to determine its own subnet (step 1104). The device, for example, may join all piconets existing in effective transmission range to determine the channels in use or channels that have been deemed Bad due to environmental noise, and may then form a piconet attempting to avoid the sensed in-use/noisy channels by labeling these channels as Bad in its channel map. When SD 1000 forms a piconet limited to a certain subnet of channels, it may also provide its sub-band information to other master devices within transmission range. This will allow the other masters or a related CC 600 to exclude the channels in use by the Scatternet device.

The present invention presents a substantial improvement over the prior art.
Short-range networks such as Bluetooth™ have the ability to account for environmental noise by using a channel map to control adaptive frequency hopping. However, this control strategy does not presently account for interference from other similar networks operating in close proximity to each other. The present invention solves this problem by providing a system for partitioning the available spectral bandwidth among the interoperating networks. In this way, each network may operate in a partitioned section of the available bandwidth and avoid data collisions. The improvement manifests an improvement in the need for fewer retransmissions of messages and hence faster system performance.

Accordingly, it will be apparent to persons skilled in the relevant art that various changes in forma and detail can be made therein without departing from the spirit and scope of the invention. This the breadth and scope of the present invention should not be limited by any of the above-described exemplary embodiments, but should be defined only in accordance with the following claims and their equivalents.

## Claims

1. A method for reducing interference between short-range communication modules, comprising:
a plurality of simultaneously operating short-range wireless communication modules; and
a controller operatively coupled to each of the plurality of short-range wireless communication modules;
wherein the controller is configured to dynamically divide an available wireless communication bandwidth into a plurality of sub-bands and allocate a sub-band to each of the plurality of communication modules.

2. The method of claim 1, wherein the plurality of simultaneously operating wireless communication modules are contained in a wireless communication device.

3. The method of claim 2, wherein the controller is contained in the same wireless communication device.

4. The method of claim 1, wherein at least one of the simultaneously operating wireless communication modules and the controller are contained in a wireless communication device.

5. The method of claim 1, wherein the available wireless communication bandwidth is determined by accounting for environmental sources of interference.

6. The method of claim 1, wherein a sub-band is allocated to one of the simultaneously operating wireless communication modules by indicating in the module that all available frequencies of the wireless communication bandwidth outside of the allocated sub-band are unavailable to the module.

7. The method of claim 1, wherein the controller continually reallocates the sub-bands depending on sensing a number of simultaneously operating short-range wireless communication modules.

8. The method of claim 1, wherein the plurality of simultaneously operating wireless communication modules communicate using at least one of a Bluetooth™ Network, a Wireless Local Area Network (WLAN), or an Ultra Wide Band Network (UWB).

9. The method of claim 1, wherein the sub-bands are determined using a channel map.

10. The method of claim 1, wherein one of the plurality of simultaneously operating wireless communication modules operates in a Scatternet mode.

11. The method of claim 10, wherein the sub-band of the Scatternet module is determined by the controller, the Scatternet module or another simultaneously operating wireless communication module.

12. The method of claim 11, wherein the Scatternet module determines its own sub-band by reporting to other modules channels currently in use by the Scatternet module as bad.

13. A wireless communication device having reduced interference between short-range communication modules, comprising:
A plurality of simultaneously operating short-range wireless communication modules; and
a controller operatively coupled to each of the plurality of short-range wireless communication modules;
wherein the controller is configured to dynamically divide an available wireless communication bandwidth into a plurality of sub-bands and allocate a sub-band to each of the plurality of communication modules.

14. The device of claim 13, wherein the plurality of simultaneously operating wireless communication modules are contained in the wireless communication device.

15. The device of claim 14, wherein the controller is contained in the same wireless communication device.

16. The device of claim 13, wherein at least one of the simultaneously operating wireless communication modules and the controller are contained in the wireless communication device.

17. The device of claim 13, wherein the available wireless communication bandwidth is determined by accounting for environmental sources of interference.

18. The device of claim 13, wherein a sub-band is allocated to one of the simultaneously operating wireless communication modules by indicating in the module that all available frequencies of the wireless communication bandwidth outside of the allocated sub-band are unavailable to the module.

19. The device of claim 13, wherein the controller continually reallocates the sub-bands depending on sensing a number of simultaneously operating short-range wireless communication modules.

20. The device of claim 13, wherein the plurality of simultaneously operating wireless communication modules communicate using at least one of a Bluetooth™ Network, a Wireless Local Area Network (WLAN), or an Ultra Wide Band Network (UWB).

21. The device of claim 13, wherein the sub-bands are determined using a channel map.

22. The device of claim 13, wherein one of the plurality of simultaneously operating wireless communication modules operates in a Scatternet mode.

23. The device of claim 22, wherein the sub-band of the Scatternet module is determined by the controller, the Scatternet module or another simultaneously operating wireless communication module.

24. The device of claim 23, wherein the Scatternet module determines its own sub-band by reporting to other modules channels currently in use by the Scatternet module as bad.

25. Computer program product comprising program code stored on a computer usable medium adapted for carrying out the steps of anyone of method claims 1 to 12, when run on a computer, processing device or terminal.

26. A system for reducing interference between short-range communication modules, comprising:
A plurality of simultaneously operating short-range wireless communication modules located within transmission range of each other; and
a controller operatively coupled to each of the plurality of short-range wireless communication modules;
wherein the controller is configured to dynamically divide an available wireless communication bandwidth into a plurality of sub-bands and allocate a sub-band to each of the plurality of communication modules.

27. A chipset operative to reduce interference between short-range communication modules, comprising:
a plurality of simultaneously operating short-range wireless communication modules; and
a controller operatively coupled to each of the plurality of short-range wireless communication modules;
wherein the controller is configured to dynamically divide an available wireless communication bandwidth into a plurality of sub-bands and allocate a sub-band to each of the plurality of communication modules.
